# EUROPÄISCHE PATENTSCHRIFT

(11) **EP 4 015 283 B1**
(45) Veröffentlichungstag und Bekanntmachung des Hinweises auf die Patenterteilung: **23.10.2024**
(21) Anmeldenummer: 21214841.5
(22) Anmeldetag: 15.12.2021
(51) Int. Cl.: B60L 50/40, B60L 53/51, B60L 15/20, B62D 53/00

(54) **FAHRZEUGGESPANNEINHEIT MIT EINER ZUGMASCHINE UND MINDESTENS EINEM ANHÄNGER**
VEHICLE COMBINATION UNIT WITH A TRACTOR AND AT LEAST ONE TRAILER
UNITÉ D'ATTELAGE DE VÉHICULE DOTÉ D'UN VÉHICULE TRACTEUR ET D'AU MOINS UNE REMORQUE

(30) Priorität: 16.12.2020 DE 102020133777
(43) Veröffentlichungstag der Anmeldung: 22.06.2022
(73) Patentinhaber: Freyhann, Wolf-Dieter, 80634 München (DE)
(72) Erfinder: Freyhann, Wolf-Dieter, 80634 München (DE)
(74) Vertreter: advotec.

(56) Entgegenhaltungen:
- EP-A1- 0 947 376
- DE-A1- 102019 202 782
- US-A1- 2014 375 272
- US-A1- 2017 174 067
- US-A1- 2017 282 894
- US-B1- 10 500 975
- US-B2- 10 023 056

## Beschreibung

Die Erfindung betrifft eine Fahrzeuggespanneinheit nach dem Oberbegriff des Anspruchs 1. Ferner betrifft die Erfindung ein Mobilitätssystem bzw. ein insbesondere dezentrales Energiespeicher- und Verteilsystem mit einer erfindungsgemäßen Fahrzeuggespanneinheit.

Grundsätzlich sind Fahrzeuggespanneinheiten, die aus einer Zugmaschine und einem Anhänger bestehen, bekannt und kommen in weiten Bereichen der Wirtschaft, der Industrie sowie im privaten Umfeld zum Einsatz. Ebenfalls bekannt sind Fahrzeuggespanneinheiten, die durch eine elektrifizierte Zugmaschine angetrieben werden. Durch derartige elektrifizierte Zugmaschinen können insbesondere Abgas- bzw. Emissionsbelastungen in bevölkerungsreichen Ballungsgebieten gesenkt werden. Dies hat einen positiven Effekt bezüglich einer Verminderung von Umweltbelastungen.

Beispielsweise ist aus der DE 10 2019 104 265 A1 eine Trageinrichtung für ein modulares Transportsystem bekannt, mit der ein Transportgut aufgenommen und transportiert werden kann.

Aus der DE 10 2018 220 337 A1 ist ein als Zugeinheit ausgeführtes, autonomes Fahrzeug bekannt, das mit einem Transportelement verbindbar ist. Das autonome Fahrzeug kann gemäß diesem Mobilitätskonzept als Elektrofahrzeug ausgebildet sein. Das Transportelement muss jedoch exakten geometrischen Anforderungen genügen, um derart mit der Zugeinheit verbindbar zu sein. Obgleich dieses Mobilitätskonzept zwar grundsätzlich ein hohes Maß an Flexibilität in der Ausgestaltung des Transportelementes erlaubt, ist aufgrund der notwenigen geometrischen Voraussetzungen, die das Transportelement erfüllen muss, eine Skalierbarkeit und somit ein flächendeckender Einsatz nur schwer umsetzbar.

Obgleich bereits eine Vielzahl von Mobilitätskonzepten bekannt ist und/oder sich in Bearbeitung befindet, macht es gerade die zunehmende Regulierung und Verschärfung von Gesetzen der Luftreinhaltung erforderlich, immer weitere modulare und adaptionsfähige, jedoch zugleich ökologisch nachhaltige Mobilitätskonzepte zu entwerfen, die insbesondere in den Bereichen Logistik, Industrie, Handwerk und/oder Personentransport ein möglichst hohes Maß an Gestaltungsspielraum zulassen. Gleichzeitig ist es wünschenswert, dass derartige Mobilitätskonzepte in ihrer Anwendung in mittelgroßen Städten (z. B. größer 100.000 Einwohner) und deren Umgebung zur Entlastung des Verkehrsaufkommens durch die Nutzung von Synergieeffekten sowie zur Einhaltung bzw. Verbesserung der Luftqualität beitragen.

Auch erscheint es aufgrund des bisherigen Herausstechens Europas, insbesondere Deutschlands, als treibender Industriestandort im Bereich der Automobiltechnik erforderlich, die über Jahrzehnte erlangte Vormachtstellung und den damit verbundenen wirtschaftlichen Wohlstand nicht leichtfertig an global verteilte Konkurrenzstandorte abzugeben. Um dieser Entwicklung entgegenzuwirken, ist es notwendig, fortlaufend neuartige und herausstechende Mobilitätskonzepte und Lösungen zu entwickeln, die auch im internationalen Umfeld zur nachhaltigen Stärkung der Vormachstellung beitragen.

Auch die klimapolitisch motivierte Veränderung des Primärenergiewandlungssektors weg von konventionellen fossilen Energieträgern hin zu dem Einsatz von erneuerbaren Energien, insbesondere Photovoltaikenergie und Windenergie, stellt die Energieversorger vor zunehmende Herausforderungen. So sind mit erneuerbaren Energien witterungsbedingt große Schwankungen bei der Energiebereitstellung verbunden, die eine Frequenzstabilisierung des Netzes und eine damit verbundene unterbrechungsfreie Energieversorgung durchaus herausfordernd gestalten. Bei einem zunehmenden Verzicht auf fossile Energieträger wird diese Problematik weiter verstärkt, da keine Puffereffekte durch die Zuschaltung von Kohle- und/oder Gaskraftwerken zur Abfangung von Spitzenlasten mehr möglich sind. Ein Lösungsansatz in diesem Bereich ist die flächendeckende Bereitstellung von Pufferspeichern in Form von Batterien, um durch diese Pufferspeicher auftretende Lastspitzen zumindest zeitweise abfangen zu können. Intelligente Lösungsansätze für ein derartiges Energiekonzept und das damit verbundene Energieverteilungs- und Lastmanagement sind beispielsweise unter dem Namen "Smart Grid" bekannt.

Allerdings ist es wünschenswert, weitere, umfassende Lösungskonzepte bereitzustellen. In Konsequenz liegt der vorliegenden Erfindung daher eine Aufgabe zugrunde, ein Mobilitätskonzept, insbesondere eine Fahrzeuggespanneinheit, zu entwickeln, die ein gewünschtes Maß an Flexibilität in ihrer Einsetzbarkeit und/oder eine ökologische und/oder ökonomische Nachhaltigkeit ermöglicht. Mit anderen Worten ist eine Aufgabe darin zu sehen, eine Fahrzeuggespanneinheit vorzuschlagen, die einen möglichst umfassenden Gestaltungsspielraum in der Nutzung und/oder Betriebsweise ermöglicht und sich adaptionsfähig gegenüber neuen Einsatzsituationen erweist.

Ebenfalls ist es eine Aufgabe der vorliegenden Erfindung, ein Mobilitätskonzept bzw. ein Mobilitätssystem zu entwickeln, das der Problematik der Energiespeicherung bzw. Energiepufferung, die bei der Energiewandlung auf Basis von erneuerbaren Energien auftritt, zumindest bereichsweise entgegenwirkt.

Weiterer Stand der Technik kann den Druckschriften EP 0 947 376 A1, US 2014/ 0 375 272 A1, US 2017/ 00 174 067 A1, DE 10 2019 202 782 A1 und US 10 500 975 B1 entnommen werden.

EP 0 947 376 A1 zeigt ein zusammengesetztes elektrisches Fahrzeugsystem umfassend ein elektrisches und eine selbstfahrende Stromversorgungseinheit auf Rädern. Das Elektrofahrzeug ist von dem herkömmlichen Elektrofahrzeug mit einem Energie- und Steuersystem modifiziert. Das Elektrofahrzeug wird von Bordbatterien oder Brennstoffzellen gespeist und von einem oder mehreren Elektromotoren über ein Steuergerät angetrieben, das die Leistungszufuhr zum Motor in Reaktion auf eine Beschleunigungsanforderung des Fahrers koordinieren kann. Abnehmbar mit dem ersten oder primären Elektrofahrzeug verbunden ist das Hilfselektrofahrzeug oder -wagen, das von einer größeren Anzahl von Batterien oder Brennstoffzellen gespeist werden kann, die dann an Bord des Elektrofahrzeugs montiert werden. Ein mikroprozessorgestütztes Steuergerät kann die Zufuhr von Energie aus den Batterien zu den Elektromotoren koordinieren.

US 2014 / 0 375 272 A1 zeigt eine Energiespeicher- und -versorgungsquelle, wie z. B. einen Anhänger oder ein abnehmbares Bordgerät mit einer vom Benutzer einstellbaren variablen Energiesteuerungsvorrichtung, die auf dem Anhänger montiert oder in das Bordgerät integriert werden kann und die versucht, automatisch eine Hochspannung anzulegen, die der maximalen Spannung entspricht oder so nahe wie möglich an die maximale Spannung herankommt, die das Batteriepaket oder die Systeme des Elektrofahrzeugs aufnehmen können.

US 2017 / 0 174 067 A1 zeigt einen Hybridantriebsstrang, eine Primärbatteriebank und einen Primärgenerator. Der Hybridantriebsstrang umfasst mindestens eine Antriebsachse mindestens einen Elektromotor, eine Antriebsbatterie und eine Energiemanagementeinheit. Der mindestens eine Elektromotor ist mit der mindestens einen Antriebsachse betriebsmäßig gekoppelt, wobei der mindestens eine Elektromotor zum Drehen der mindestens einen Antriebsachse verwendet wird. Die Antriebsbatterie ist eine wiederaufladbare Batterie, die dazu dient, den mindestens einen Elektromotor mit elektrischer Energie zu versorgen.

DE 10 2019 202 782 A1 zeigt ein Gespann, das eine erste Gespann-Komponente und eine zweite Gespann-Komponente aufweist. Die erste Gespann-Komponente ist ein Zugfahrzeug und die zweite Gespann-Komponente ist ein Wohnanhänger. Beide Gespann-Komponenten sind miteinander verbunden über eine Anhängerkupplung. Die erste Gespann-Komponente weist eine erste Antriebseinheit auf. Die zweite Gespann-Komponente weist eine zweite Antriebseinheit auf. Die Energiespeicher von beiden Gespann-Komponenten sind mittels eines Kabels miteinander verbunden, so dass bei Bedarf ein Energieaustausch erfolgen kann.

US 10 500 975 B1 offenbart ein Gespann mit einem elektrischen Fahrzeug und einem elektrisch angetriebenen Anhänger wobei sowohl das Fahrzeug als auch der Anhänger eine Vielzahl von elektrischen Antriebsachsen aufweisen können.

Der Erfindung liegt daher eine Aufgabe zugrunde, eine Fahrzeuggespanneinheit vorzuschlagen, die einen möglichst umfassenden Gestaltungsspielraum in der Nutzung und Betriebsweise ermöglicht und sich somit adaptionsfähig gegenüber neuen Einsatzsituationen und/oder Einsatzbereichen erweist.

Eine Lösung bietet eine Fahrzeuggespanneinheit nach der Lehre des Anspruchs 1. Vorteilhafte Ausführungsformen der Erfindung sind Gegenstand der abhängigen Ansprüche und werden durch die vorliegende Beschreibung umfangreich ergänzt.

Die Fahrzeuggespanneinheit gemäß der Erfindung umfasst eine Zugmaschine mit zumindest einer ersten Antriebsachse und einem Elektromotor. Der Elektromotor ist dazu ausgebildet, die erste Antriebsachse anzutreiben. Ferner umfasst die Zugmaschine eine erste Energiespeichereinheit. Die Fahrzeuggespanneinheit umfasst eine Schnittstelle, eine erste Leistungselektronik und mindestens einen Anhänger mit mindestens einer Radachse, der über die Schnittstelle mit der Zugmaschine koppelbar ist. Der Anhänger umfasst eine zweite Energiespeichereinheit. Die zweite Energiespeichereinheit ist also vorzugsweise in dem oder an dem mindestens einen Anhänger angeordnet. Erfindungsgemäß ist die erste Leistungselektronik dazu eingerichtet, zumindest den Elektromotor der ersten Antriebsachse in Abhängigkeit von einer jeweiligen Betriebssituation der Fahrzeuggespanneinheit über die Schnittstelle, d. h. vorzugsweise durch einen elektrischen Energiefluss aus der zweiten Energiespeichereinheit über die Schnittstelle zu dem Elektromotor, mit elektrischer Energie zu speisen. Die elektrische Energie wird zumindest teilweise aus der zweiten Energiespeichereinheit entnommen. Die Zugmaschine umfasst eine zweite Leistungselektronik, die dazu eingerichtet ist, zumindest einen Elektromotor einer zweiten Antriebsachse der Zugmaschine in Abhängigkeit von einer jeweiligen Betriebssituation der Fahrzeuggespanneinheit mit elektrischer Energie aus der ersten Energiespeichereinheit zu speisen. Die erste Energiespeichereinheit umfasst eine Hochvoltbatterie. Die zweite Energiespeichereinheit umfasst eine Niedervoltbatterie. Der Elektromotor der ersten Antriebsachse ist als ein Niedervoltantrieb ausgebildet. Der Elektromotor der zweiten Antriebsachse ist als ein Hochvoltantrieb ausgebildet.

Vorteile der erfindungsgemäßen Fahrzeuggepanneinheit sind ihre nachhaltige und leise bzw. geräuscharme Betriebsweise. Ebenfalls bietet die Fahrzeuggespanneinheit ein flexibles Konzept, das sich beispielsweise für den Einsatz in Krankenhäusern, Baumärkten, Möbelhäusern, Apotheken, Elektrofachhandel, Nahversorgung, Flughäfen, Bahnhöfen, Messen, Freizeitparks, Hotellerie und allgemein für den Bereich der Waren- und Dienstleistungslogistik eignet. Ebenfalls zeichnet sich die Fahrzeuggepanneinheit durch ihre Skalierbarkeit und durch ihre Eignung zum Fahrzeugflottenbetrieb aus. Ebenfalls macht die erfindungsgemäße Fahrzeuggepanneinheit die Nutzung von regenerativer Energie insbesondere flächendeckend möglich. Sie bietet eine autarke Versorgung und reduziert die Gefahr von (lokalen) Blackouts des Stromnetzes durch die bevorzugte Bereitstellung einer Zwischenspeicherlösung. Die Bereitstellung der Zwischenspeicher durch die zweite Energiespeichereinheit ermöglicht zudem die Schaffung eines Geschäfts- bzw. Einnahmemodelles, da der Betreiber der Fahrzeuggespanneinheit(en) bevorzugt von den Energielieferanten dafür entlohnt wird, dass er einen temporären Energiespeicher bereitstellt. Die Fahrzeuggespanneinheit kann besonders bevorzugt im Tag- und Nachtbetrieb, beispielsweise zum Bringen, Abholen, Sammeln, Verteilen und/oder Ausliefern von Waren Verwendung finden.

Die erfindungsgemäße Fahrzeuggepanneinheit stellt also ein Mobilitätssystem beziehungsweise ein Mobilitätskonzept bereit, welches einen innerstädtischen Gütertransport mit einem städtischen Umland auf adaptive Weise verbindet. Dabei werden Mobilität-, Logistik-, und Energiemanagement auf erfindungsgemäße Art und Weise derart miteinander vereint, dass hierdurch tragende Elemente der Nachhaltigkeit und der Unterstützung der Gewerbevielfalt, insbesondere im urbanen Bereich, zum Einsatz kommen.

Die erfindungsgemäße Fahrzeuggespanneinheit stellt mit anderen Worten eine Art Kompakt-Sattelschlepper dar, der aus der Zugmaschine und dem mindestens einen Anhänger besteht und dabei derart ausgelegt ist, dass er auf befestigten und nicht befestigten Straßen und Verkehrswegen aller Art einsetzbar ist. Dabei hat die Fahrzeuggespanneinheit selbst im gekoppelten Zustand eine derartige Gewichts- und Größenklasse (z. B. Gesamtlänge mit Anhänger ca. 5700 mm, Gesamthöhe ca. 1700 mm, Gesamtbreite ohne Spiegel ca. 1800 mm und eine zulässige Gesamtmasse von < 3500 kg), dass eine Einordnung in die Kategorie "Nutzfahrzeug" ermöglicht ist. Dies hat insbesondere für Unternehmen und diverse Industriezweige versicherungsökonomische Vorteile.

Somit eröffnet dieses, insbesondere zweiteilige, Mobilitätskonzept für die Bereiche der Elektromobilität, der Energieeffizienz sowie der Logistik vollkommen neue Einsatzbereiche und macht eine Entwicklung, einen Ausbau und eine Verbreitung neuartiger Geschäftsmodelle, bei welchen die erfindungsgemäße Fahrzeuggespanneinheit zum Einsatz kommt, möglich. Besonders vorteilhaft ist, dass bei der erfindungsgemäßen Fahrzeuggespanneinheit der Gesamtenergiespeicher in mindestens zwei Teile, die erste und die zweite Energiespeichereinheit, gesplittet ist, so dass zumindest ein Teil des Gesamtenergiespeichers im Anhänger angeordnet ist. Hierdurch kann zum einen eine Reichweitenverlängerung ermöglicht und somit eine Einsatzvielfalt der Fahrzeuggespanneinheit erhöht werden. Zum anderen kann die Energie der beiden Energiespeichereinheiten situationsoptimiert abgerufen und derart reichweiteverlängernd eingesetzt werden.

Der erfindungsgemäße Anhänger zeichnet sich insbesondere dadurch aus, dass er zum einen auf adaptive Art und Weise als Ladegutträger für ein zu beförderndes Ladegut zum Einsatz kommen kann. Zum andern umfasst der Anhänger die zweite Energiespeichereinheit. Vorzugsweise kann der Anhänger auch eine auf die zweite Energiespeichereinheit ausgelegte Ladeschnittstelle umfassen. Ebenso ist der Anhänger vorzugsweise derart mit der ersten Leistungselektronik verbunden, dass diese als eine Art "Energieschaukel" fungiert, die betriebssituationsabhängig zumindest die Speisung des Elektromotors der ersten Antriebsachse mit elektrischer Energie regelt. Die erste Leistungselektronik fungiert vorzugsweise als eine Art energetische Kommunikationseinheit, die je nach Fahrsituation und/oder Betriebssituation und/oder Lastsituation entscheidet, ob der Elektromotor der ersten Antriebsachse mit elektrischer Energie aus der zweiten Energiespeichereinheit zu speisen ist oder nicht. Bei der Leistungselektronik kann es sich vorzugsweise um eine Vehicle-Control-Unit (bzw. Fahrzeugsteuereinheit) handeln.

Es versteht sich, dass es grundsätzlich möglich ist, dass die erste Leistungselektronik dazu eingerichtet sein kann, den Elektromotor der ersten Antriebsachse der Zugmaschine in Abhängigkeit von einer jeweiligen Betriebssituation der Fahrzeuggespanneinheit mit elektrischer Energie zu speisen, die zumindest teilweise aus der ersten Energiespeichereinheit entnommen werden kann. In diesem Fall ist es technisch vorteilhaft, wenn sowohl die erste Energiespeichereinheit als auch die zweite Energiespeichereinheit ein gleiches Spannungsniveau aufweisen, um derart vorzugsweise eine Spannungsumrichtung, z. B. durch einen DC/DC-Wandler, bei der Speisung des Elektromotors der ersten Antriebsachse zu vermeiden. Je nach Architektur und Auslegung, insbesondere bei verschiedenen Spannungsniveaus der ersten und der zweiten Energiespeichereinheit, kann es vorteilhaft sein, wenn die erste Leistungselektronik über einen DC/DC-Wandler den Elektromotor der ersten Antriebsachse mit elektrischer Energie speisen kann.

Es versteht sich zudem, dass es sich bei einer "Antriebsachse" nicht notwendigerweise um eine sich über eine gesamte Fahrzeugbreite der Zugmaschine erstreckende Radachse bzw. Hauptachse handeln muss. Vielmehr kann es sich bei der Antriebsachse um eine Radnabe eines einzelnen Rades der Zugmaschine handeln. Der Elektromotor der Antriebsachse kann beispielsweise dazu ausgebildet sein, ein einzelnes Rad anzutreiben, wobei der Elektromotor in einem derartigen Fall vorzugsweise als ein Radnabenmotor ausgestaltet ist. Alternativ kann der Elektromotor der ersten Antriebsachse die beiden Räder antrieben, die auf der ersten Antriebsachse sitzen (Frontantrieb und/oder Heckantrieb).

Besonders bevorzugt handelt es sich bei der ersten Antriebsachse um eine heckseitige Antriebsachse der Zugmaschine. Grundsätzlich ist es auch denkbar, dass es sich bei der ersten Antriebsachse um eine frontseitige Antriebsachse der Zugmaschine handelt. Die erste Antriebsachse ist besonders bevorzugt nicht als Hauptantriebsachse der Zugmaschine zu verstehen, sondern stellt einen Hilfs- und/oder Unterstützungsantrieb bereit, der je nach Fahrsituation bzw. Betriebssituation unterstützend zu einem vorteilhaften Hauptantrieb hinzugeschaltet werden kann. Die erste Antriebsachse kann jedoch je nach Betriebssituation selbstverständlich auch als Hauptantriebsachse fungieren. Alternativ oder ergänzend kann die erste Antriebsachse bzw. deren Elektromotor in einer vorbestimmten Betriebssituation, z. B. bei einer Fahrt unterhalb eines vorbestimmten Geschwindigkeitsgrenzwertes, z. B. kleiner gleich 50 km/h, den gesamten Antrieb (die gesamte Antriebskraft) bereitstellen, wobei sich in einer derartigen Betriebssituation der Hauptantrieb der Zugmaschine vorzugsweise in einer Leerlaufstellung befindet, in der keine Antriebskraft bereitgestellt wird. Der Hauptantrieb kann jedoch grundsätzlich zum Hilfsantrieb, der vorzugsweise durch die erste Antriebsachse bereitgestellt ist, betrieben werden.

Die erfindungsgemäße Schnittstelle ist nicht zu vergleichen mit einem reinen Anschlusskabel, durch das der Anhänger mit der Zugmaschine elektrisch verbindbar ist, da die erfindungsgemäße Schnittstelle vorzugsweise sowohl eine mechanische als auch eine elektrische Kopplung zwischen der Zugmaschine und dem mindestens einen Anhänger vereint. Es ist also lediglich notwendig, den mindestens einen Anhänger über die Schnittstelle mit der Zugmaschine zu koppeln, wodurch zugleich der zweite Energiespeicher über die Schnittstelle und zumindest die erste Leistungselektronik mit dem Elektromotor der ersten Antriebsachse der Zugmaschine gekoppelt ist. Auf diese Weise ist ein besonders einfaches Anschließen bzw. Zuschalten des Hilfsantriebes, vorzugsweise zusätzlich zu einem Hauptantrieb der Zugmaschine ermöglicht. Ferner ist die erfindungsgemäße Schnittstelle vorzugsweise derart adaptiv ausgebildet, dass sie mit einer Vielzahl verschiedener Anhänger koppelbar ist.

Es ist zu erwähnen, dass die erste Leistungselektronik bzw. Steuerelektronik vorzugsweise dazu eingerichtet ist, die Speisung des Elektromotors der ersten Antriebsachse zumindest aus der zweiten Energiespeichereinheit betriebssituationsabhängig zu regeln. Unter einer "betriebssituationsabhängigen" Regelung ist zu verstehen, dass die erste Leistungselektronik eine Stromspeisung des Elektromotors der ersten Antriebsachse vorzugsweise in Abhängigkeit von einem Beladungszustand der Zugmaschine und/oder des mindestens einen Anhängers und/oder in Abhängigkeit von einer Fahrgeschwindigkeit und/oder in Abhängigkeit von einem Fahrbahnprofil und/oder in Abhängigkeit von einem Steigungsprofil der Fahrtstrecke regelt. Auf diese Weise ist es möglich, die Fahrzeuggespanneinheit situationsoptimiert unterstützend und/oder gesamthaft durch die erste, vorzugsweise heckseitige Antriebsachse anzutreiben.

Im Falle, dass der mindestens eine Anhänger an die Zugmaschine angeschlossen beziehungsweise mit dieser gekoppelt ist, kann die erste Leistungselektronik dazu ausgebildet sein, den Elektromotor der ersten Antriebsachse mit der elektrischen Energie der zweiten Energiespeichereinheit zu speisen und somit die Fahrzeuggespanneinheit entweder nur über ein an der zweiten Antriebsachse bereitgestelltes Drehmoment anzutreiben oder einen derartigen (Hilfs-)Antrieb unterstützend zu einem durch eine Hauptantriebsachse der Zugmaschine bereitgestellten Drehmoment bereitzustellen.

Es versteht sich, dass es grundsätzlich beliebig ist, wo die erste Leistungselektronik in der Fahrzeuggespanneinheit platziert ist. Vorzugsweise kann die erste Leistungselektronik in der Zugmaschine umfasst sein. Alternativ kann die erste Leistungselektronik auch in dem mindestens einen Anhänger umfasst sein, wobei in diesem Fall vorzugsweise eine elektrische Verbindung zwischen der zweiten Energiespeichereinheit und der ersten Leistungselektronik vorgesehen ist und die erste Leistungselektronik ausgangsseitig zumindest mit einem Teil mit der Schnittstelle elektrisch verbunden ist, der an dem Anhänger angeordnet ist.

Erfindungsgemäß umfasst die Zugmaschine eine zweite Leistungselektronik, die dazu eingerichtet ist, zumindest einen Elektromotor einer zweiten Antriebsachse der Zugmaschine in Abhängigkeit von einer jeweiligen Betriebssituation der Fahrzeuggespanneinheit mit elektrischer Energie aus der ersten Energiespeichereinheit zu speisen. Mit anderen Worten umfasst die Zugmaschine gemäß dieser Ausführungsform die zweite Antriebsachse, die über einen Elektromotor angetrieben werden kann. Eine derartige zweite Antriebsachse stellt vorzugsweise eine Hauptantriebsachse bzw. Primärantriebsachse der Zugmaschine bereit. Die zweite Antriebsachse ist vorzugsweise eine Frontantriebsachse, d. h., die Zugmaschine ist vorzugsweise mit einem durch die zweite Antriebsachse bereitgestellten Frontantrieb ausgeführt. Der Elektromotor der zweiten Antriebsachse kann je nach Betriebssituation, beispielsweise oberhalb eines vorbestimmten Fahrtgeschwindigkeitsgrenzwertes (z. B. > 50 km/h) vorzugsweise mit elektrischer Energie aus dem ersten Energiespeicher gespeist werden. Unter einer Regelung "in Abhängigkeit von einer jeweiligen Betriebssituation" ist zu verstehen, dass die zweite Leistungselektronik eine Stromspeisung des Elektromotors der zweiten Antriebsachse vorzugsweise in Abhängigkeit von einem Beladungszustand der Zugmaschine und/oder des mindestens einen Anhängers und/oder in Abhängigkeit von einer Fahrgeschwindigkeit und/oder in Abhängigkeit von einem Fahrbahnprofil und/oder in Abhängigkeit von einem Steigungsprofil der Fahrtstrecke regelt. Auf diese Weise ist es möglich, die Fahrzeuggespanneinheit situationsoptimiert durch die zweite Antriebsachse (Hauptantrieb) und/oder die erste Antriebsachse (Unterstützungs- und/oder Hilfsantrieb) anzutreiben.

Es versteht sich, dass die zweite Leistungselektronik grundsätzlich in der ersten Leistungselektronik umfasst sein kann oder umgekehrt. Auch kann es sich bei der ersten und der zweiten Leistungselektronik grundsätzlich um eine einzige Leistungselektronik handeln, die in Abhängigkeit von der Fahrbetriebssituation eine Antriebsverteilung zwischen der ersten und der zweiten Antriebsachse sowie einen Energiefluss aus der ersten Energiespeichereinheit und/oder der zweiten Energiespeichereinheit situationsoptimiert regelt. Die erste Leistungselektronik ist vorzugsweise dazu ausgebildet, einen Energieverbrauch auf einer mit der Fahrzeuggespanneinheit zurückzulegenden Wegstrecke zu planen. Dabei verknüpft die erste Leistungselektronik bzw. eine darauf ausgeführte Software eine zur Beförderung eines gewünschten Ladegutes benötigte Energie mit diesem Ladegut. Hierdurch wird vorzugsweise die Möglichkeit geboten, die verbrauchte Energie als Zahlungsmittel einzusetzen.

Ebenfalls versteht es sich, dass es technisch möglich ist, auch den Elektromotor der zweiten Antriebsachse über die erste Leistungselektronik mit Energie aus der zweiten Energiespeichereinheit zu speisen. Hierzu ist es technisch vorteilhaft, wenn beide Energiespeichereinheiten ein gleiches oder zumindest ähnliches (± 10) Spannungsniveau umfassen und die Elektromotoren der beiden Antriebsachsen mit der gleichen Arbeitsspannung betrieben werden. Ebenfalls ist es technisch möglich und ggf. vorteilhaft, die erste und die zweite Antriebsachse über nur einen einzigen Elektromotor anzutreiben, der beispielsweise über die erste Leistungselektronik mit elektrischer Energie aus der ersten Energiespeichereinheit und/oder der zweiten Energiespeichereinheit gespeist werden kann.

Bevorzugt umfasst die Fahrzeuggespanneinheit eine Kommunikationsschnittstelle zur Kommunikation zwischen der Zugmaschine und dem Anhänger und vorzugsweise mit einer Fahrzeugumgebung. Die Kommunikationsschnittstelle kann vorzugsweise in der ersten und/oder der zweiten Leistungselektronik umfasst sein. Die Kommunikationsschnittstelle steuert bzw. "schaukelt" vorzugsweise eine Energieverteilung bzw. eine Speisung der Elektromotoren der ersten und der zweiten Antriebsachse unter Einbeziehung der geplanten Einsätze der Fahrzeuggespanneinheit und/oder der in der Umgebung bereitgestellten Lademöglichkeiten. Die Kommunikationsschnittstelle ist vorzugsweise dazu eingerichtet, vorbestimmte Ortungs- und/oder Statusprotokolle Energiedienstleistern und/oder anderen Unternehmensbereichen (z. B. der Logistik) verfügbar zu machen.

Gemäß der bevorzugten Ausführungsform basiert die erfindungsgemäße Zugmaschine vorzugsweise auf einer konventionellen, von einem OEM (Original Equipment Manufacturer) gelieferten Fahrzeugplattform und baut vorzugsweise auf einer am Markt erhältlichen Fahrzeugarchitektur auf. Diese konventionelle Fahrzeugplattform umfasst vorzugsweise OEM-seitig bereitgestellte, konventionelle Fahrzeugkomponenten, wie beispielsweise eine Vorderradachse (hier: die zweite Antriebsachse) mitsamt einem elektromotorischen Antrieb, eine Lenkung, ein rekuperatives Bremssystem und einen konventionellen Energiespeicher (die erste Energiespeichereinheit) mitsamt einer zugehörigen Lade- und Leistungselektronik. Die konventionelle Zugmaschine wird erfindungsgemäß um die Schnittstelle und die erste Antriebsachse (vorzugsweise die Hinterradantriebsachse) sowie um die erste Leistungselektronik ergänzt. Die Ergänzung um die erste Leistungselektronik kann vorzugsweise mittels eines softwareseitigen Updates der konventionell eingesetzten (zweiten) Leistungselektronik bereitgestellt sein. Dies hat den Vorteil, dass die erfindungsgemäße Fahrzeuggespanneinheit konstruktiv keiner vollkommenen Neuentwicklung bedarf, sondern ein konventionelles Fahrzeug bzw. eine konventionelle Zugmaschine nur in technischer Hinsicht erweitert werden muss. Somit ist eine Vielzahl von Synergieeffekten nutzbar. Ebenso können erfindungsgemäß massenmarktbedingte Effekte (Skaleneffekte) nutzbar gemacht werden, was die wirtschaftliche Attraktivität der erfindungsgemäßen Fahrzeuggespanneinheit steigert. Die technische Umgestaltung bzw. Erweiterung einer konventionellen Zugmaschine kann vorzugsweise eine Rahmenstruktur (Rohbau- bzw. Karosseriestruktur), eine Fahrerzelle, vorzugsweise mitsamt einem Interieur, sowie die spezifische Ausgestaltung der Schnittstelle betreffen. Es ist zu erwähnen, dass die erfindungsgemäße Fahrzeuggespanneinheit selbstredend sämtliche Kollisions-, Sicherheits-, Steifigkeits- und Festigkeitsstandards der Automobiltechnik (verzeichnet in der Verordnung für Homologation) erfüllt.

Erfindungsgemäß umfasst die zweite Energiespeichereinheit eine Niedervoltbatterie. Erfindungsgemäß ist der Elektromotor der ersten Antriebsachse als ein Niedervoltantrieb ausgebildet. Die Ausgestaltung des Elektromotors der ersten Antriebsachse als Niedervoltantrieb sowie der zweiten Energiespeichereinheit als Niedervoltbatterie ist eine bevorzugte Alleinstellung der erfindungsgemäßen Fahrzeuggespanneinheit, da ein Niedervoltantrieb in vielerlei Hinsicht vorteilhaft ist. Zum einen ermöglicht ein Niedervoltantrieb bzw. ein Niedervoltspeicher eine einfache und kostengünstige Auslegung der Schnittstelle in elektrischer Hinsicht. So sind im Gegensatz zu Hochvoltsystemen (z. B. 400 Volt) aufgrund des geringen Spannungsniveaus keine aufwendigen Sicherheitsvorkehrungen notwendig. Welche Art der Batterie als Niedervoltbatterie zum Einsatz kommt ist grundsätzlich beliebig. Unter Niedervolt (NV) ist eine Spannung zu verstehen, die Grenzwerte für den Spannungsbereich nach der Norm IEC 60449 nicht überschreitet. Es handelt sich um einen Bereich der Niederspannung, dessen Werte für Wechselspannung (~/AC) 30 V und für Gleichspannung (=/DC) 60 V nicht überschreiten. Mit anderen Worten werden Systeme, die mit Wechselspannungen im Fahrzeugbereich bis einschließlich 30 V oder mit Gleichspannungen bis einschließlich 60 V betrieben werden, als Niedervoltsystem oder Niedervolt (kurz NV) bezeichnet.

Grundsätzlich ist es möglich, dass als zweite Energiespeichereinheit eine bereits gebrauchte Traktionsbatterie eines Automobils in der "Second Life"-Lösung zum Einsatz kommt. Dies kann insbesondere im Segment der Nutzfahrzeuge mit ihrer eingeschränkten Performance von Vorteil sein, da in diesem Fahrzeugbereich die Energiespeichereinheit über einen längeren Zeitraum die geforderten Leistungsspezifikationen erfüllen kann. So werden beispielsweise bei BEVs (Battery Electric Vehicles) die Batterien bereits ausgetauscht, wenn sie 80 % ihrer ursprünglichen Spitzenkapazität aufweisen. Derartige Batterien können erfindungsgemäß allerdings noch zum Einsatz kommen, da diese verminderte Kapazität immer noch ausreichend ist, um die erste Antriebsachse anzutreiben.

Erfindungsgemäß umfasst die erste Energiespeichereinheit eine Hochvoltbatterie und die zweite Energiespeichereinheit eine Niedervoltbatterie. Erfindungsgemäß ist der Elektromotor der zweiten Antriebsachse als ein Hochvoltantrieb ausgebildet. Welche Art der Batterie als Hochvoltbatterie zum Einsatz kommt, ist grundsätzlich beliebig. Besonders bevorzugt kann es sich bei der Niedervoltbatterie um eine Redox-Flow-Batterie handeln. Durch diesen Batterietyp kann insbesondere eine hohe Leistungs- und Energiedichte bereitgestellt werden. Besonders bevorzugt handelt es sich bei der Hochvoltbatterie um einen Lithium-Ionen-basierten Batterietyp. Ein Hochvoltsystem, oder Hochvolt (kurz HV), ist ein Begriff aus der Fahrzeugtechnik für Systeme, die mit Wechselspannungen über 30 V bis 1 kV oder mit Gleichspannungen über 60 V bis 1,5 kV betrieben werden.

Gemäß dieser Ausführungsform sind der Elektromotor der zweiten Antriebsachse (der Hauptantrieb) und die erste Energiespeichereinheit im Hochvoltbereich (z. B. mit einem Spannungsniveau von 200 bis 800 Volt) ausgebildet, wohingegen der Elektromotor der ersten Antriebsachse sowie die zweite Energiespeichereinheit im Niedervoltbereich (z.B. 10 bis 50 Volt) ausgebildet sind. Die erfindungsgemäße, nachträgliche Ergänzung beziehungsweise Erweiterung der vorzugsweise konventionellen Fahrzeugarchitektur der Zugmaschine mit Hochvoltantrieb ist nämlich insbesondere sicherheitstechnisch einfacher, wenn die erste Antriebsachse und die zweite Energiespeichereinheit im Niedervoltbereich nachgerüstet sind. Die Ausführung des Elektromotors der zweiten Antriebsachse als Hochvoltantrieb sowie der ersten Energiespeichereinheit als Hochvoltbatterie entspricht der konventionellen Fahrzeugarchitektur im Bereich der Battery Electric Vehicles (BEVs).

In einer bevorzugten Ausführungsform ist die zweite Energiespeichereinheit über die Schnittstelle mit der ersten Leistungselektronik verbunden. In dieser Ausführungsform ist die erste Leistungselektronik in der Zugmaschine angeordnet. Diese Platzierung der ersten Leistungselektronik kann vorteilhaft sein, wenn beispielsweise eine Vielzahl von Anhängern als Fuhrpark für eine Zugmaschine zur Verfügung steht. Somit muss die erste Leistungselektronik lediglich in der Zugmaschine vorgesehen sein und kann mit dem jeweiligen Anhänger über die Schnittstelle mit der zweiten Energiespeichereinheit gekoppelt werden. Ein weiterer Vorteil dieser Ausgestaltung ist, dass die erste Leitungselektronik ausgangsseitig, d. h. in Speisungsrichtung hin zum Elektromotor der ersten Antriebsachse, keine anschlussbedingten Schwankungen erfährt, wodurch zumindest ausgangsseitig ein störungsfreier Betrieb der Leistungselektronik ermöglicht ist. Eingangsseitige Signal- bzw. Energieschwankungen, die ggf. aufgrund des Anschlusses über die Schnittstelle auftreten können, sind durch ein Vorsehen entsprechender Filter zur Glättung und/oder Dämpfung ausräumbar.

Auch kann die erste Leistungselektronik einen oder mehrere DC/DC-Wandler umfassen. Je nach Ausgestaltung des Elektromotors der ersten Antriebsachse umfasst die Leistungselektronik vorzugsweise zumindest einen DC/AC-Wandler (Wechselrichter), um den Elektromotor mit elektrischer Wechselspannung zu speisen. Der Elektromotor kann beispielsweise als Asynchronmotor oder Transversalflussmotor oder Synchronmotor ausgebildet sein, um nur beispielhafte Motorarten zu nennen. Es versteht sich, dass selbige Ausführungen auch für die zweite Leistungselektronik und für den Elektromotor der zweiten Antriebsachse gelten, ohne hierzu redundant erwähnt zu werden.

In einer bevorzugten Ausführungsform umfasst die Zugmaschine eine dritte Energiespeichereinheit, insbesondere eine Pufferbatterie und/oder einen Super-Kondensator. Vorzugsweise ist die zweite Energiespeichereinheit mit der dritten Energiespeichereinheit über die Schnittstelle elektrisch leitend verbunden, und die dritte Energiespeichereinheit ist mit der ersten Leistungselektronik elektrisch leitend verbunden. Diese Ausgestaltung kann regelungstechnisch von Vorteil sein, da Energie aus der zweiten Energiespeichereinheit in die dritte Energiespeichereinheit "gepumpt" bzw. überführt werden kann und im Nachgang der ersten Leistungselektronik zugeführt wird. Eine Energiezufuhr von der zweiten Energiespeichereinheit in die dritte Energiespeichereinheit und umgekehrt kann vorzugsweise auch induktiv (bspw. durch induktives Laden) erfolgen. Hierdurch kann u. U. die Regelung der ersten Leistungselektronik aufgrund einer konstanten Eingangsleistung vereinfacht sein. Die dritte Energiespeichereinheit kann eine Partition der ersten Energiespeichereinheit, vorzugsweise mit einem anderen Spannungsniveau ausbilden.

Die vorliegende Erfindung kann in einem weiteren, selbstständigen Aspekt auch durch eine Zugmaschine, die einen Teil einer erfindungsgemäßen Fahrzeuggespanneinheit bilden kann, gelöst werden. Die Zugmaschine umfasst in diesem Aspekt zumindest die erste Antriebsachse mit einem Elektromotor. Der Elektromotor ist dazu ausgebildet, die erste Antriebsachse anzutreiben. Ferner umfasst die Zugmaschine die zweite Antriebsachse mit einem Elektromotor. Der Elektromotor ist dazu ausgebildet, die zweite Antriebsachse anzutreiben. Ferner umfasst die Zugmaschine eine erste Energiespeichereinheit und vorzugsweise eine dritte Energiespeichereinheit. Die Zugmaschine gemäß diesem Aspekt umfasst ferner eine Leistungselektronik, die vorzugsweise dazu ausgebildet sei kann, sowohl den Elektromotor der ersten Antriebsachse als auch den Elektromotor der zweiten Antriebsachse anzutreiben. Die Zugmaschine umfasst ferner zumindest einen Teil der zuvor genannten Schnittstelle, die dazu ausgebildet ist, mit einem Anhänger koppelbar zu sein. Die erste Antriebsachse mitsamt dem Elektromotor ist vorzugsweise als Niedervoltantrieb ausgebildet. Die zweite Antriebsachse mitsamt dem Elektromotor ist vorzugsweise als Hochvoltantrieb ausgebildet. Der erste Energiespeicher ist vorzugsweise eine Hochvoltbatterie. Der dritte Energiespeicher ist vorzugsweise eine Niedervoltbatterie. Gemäß diesem Aspekt ist es möglich, dass die Zugmaschine beispielsweise während einer Überlandfahrt oder bei einem sonstigen Energiesparbetrieb lediglich durch den Niedervoltantrieb angetrieben werden kann. Erst wenn mehr Leistung benötigt wird oder eine vorbestimmte Grenzgeschwindigkeit erreicht wird, schaltet die Leistungselektronik vorzugsweise von dem Niedervoltantrieb in den Hochvoltantrieb um, so dass die Zugmaschine dann von der zweiten Antriebsachse angetrieben wird. Auch ein kombinierter Antrieb aus erster und zweiter Antriebsachse ist möglich. Es versteht sich, dass sich sämtliche zu den einzelnen technischen Merkmalen zuvor oder nachstehend gemachten Ausführungen in äquivalenter Form auf die Zugmaschine gemäß dem zweiten Aspekt der Erfindung beziehen, ohne nochmals in separater Form aufgeführt zu werden.

In einer bevorzugten Ausführungsform ist die Schnittstelle durch eine mechanische Kopplung, insbesondere eine Anhängerkupplung und/oder elektrische Kopplung, die insbesondere einen oder mehrere Schaltschütze umfassen kann, zwischen der Zugmaschine und dem Anhänger ausgebildet. Besonders bevorzugt kann die erfindungsgemäße Schnittstelle einen oder mehrere Schaltschütze aufweisen, durch die die elektrische Kopplung zumindest teilweise geregelt bzw. abgesichert werden kann. Besonders bevorzugt können auch Teile der mechanischen Kopplung, beispielsweise die Sattelkupplung als elektrische Kopplung fungieren. Dabei kann beispielsweise der Sattel, der in eine Sattelpfanne eingreift, dazu Verwendung finden, den Anhänger mit der Zugmaschine elektrisch zu koppeln. In diesem Fall ist sicherzustellen, dass die Sattelkupplung nach außen hin hinreichend isoliert ist. Sowohl die Zugmaschine als auch der mindestens eine Anhänger weisen vorzugsweise jeweils zueinander komplementäre Teile der Schnittstelle auf.

In einer bevorzugten Ausführungsform umfasst der Anhänger zumindest eine mit einem Elektromotor angetriebene dritte Antriebsachse. Der mindestens eine Anhänger kann gemäß einer bevorzugten Ausführungsform auch über einen selbstständigen Antrieb bzw. eine selbstständige Antriebsachse verfügen. Dies kann insbesondere von Vorteil sein, wenn der mindestens eine Anhänger auf (teil-) autonome Art und Weise rangiert werden soll und auch unabhängig von der Zugmaschine fahrbar sein soll. Durch die Antriebsachse des mindestens einen Anhängers ist es möglich, beispielsweise bei Ein- und Ausparkvorgängen lediglich ein vorbestimmtes Rad des Anhängers separat anzutreiben, um somit den Anhänger beispielsweise um einen vordefinierten Drehpunkt bzw. Wendepunkt zu drehen. Auf diese Weise ist es möglich, dass die Zugmaschine und der Anhänger in einer Ein- und Ausparkposition beispielsweise eine 90° Stellung zueinander einnehmen können, in der der Anhänger durch seinen eigenen Antrieb raumsparend ein- und ausparken kann. Besonders eine Ansteuerung der dritten Antriebsachse bzw. deren Elektromotors über Bluetooth und/oder W-LAN ist vorteilhaft.

Ebenfalls ist es von Vorteil, wenn der Anhänger eine eigenständige Antriebsachse umfasst, da hierdurch beispielsweise ein ferngesteuertes oder autonomes Koppeln zwischen der Zugmaschine und dem Anhänger bereitgestellt werden kann. So kann der Anhänger vorzugsweise selbstständig einen komplementären Schnittstellenabschnitt an der Zugmaschine anfahren und sich somit mit der Zugmaschine koppeln.

Bevorzugt umfasst die Fahrzeuggespanneinheit für einen derartigen zumindest teilweise automatisierten Koppelvorgang einen oder mehrere optische und/oder taktile Sensoren, die dazu eingerichtet sind, einen jeweiligen Schnittstellenabschnitt der Schnittstelle an der Zugmaschine und/oder dem Anhänger zu erfassen. Auf Basis der erfassten Relativpositionen zwischen den Schnittstellenabschnitten kann die Zugmaschine und/oder der Anhänger ferngesteuert und/oder autonom zueinander verfahren werden, so dass eine Kopplung ermöglicht ist. Auch ist es denkbar, dass mindestens einer der Schnittstellenabschnitte, entweder an der Zugmaschine und/oder dem Anhänger, robotisch verfahrbar ist und beispielsweise wie ein Mehrgelenkroboterarm bewegbar ist, um sich mit dem komplementären Schnittstellenabschnitt zu koppeln.

In einer bevorzugten Ausführungsform ist an der Zugmaschine der erste Schnittstellenabschnitt und an dem mindestens einen Anhänger der zweite Schnittstellenabschnitt ausgebildet, der mit dem ersten Schnittstellenabschnitt mechanisch und/oder elektrisch kompatibel ist bzw. komplementär zu diesem ausgeführt ist. Besonders bevorzugt ist die Zugmaschine somit dazu eingerichtet, modular mit einer Mehrzahl von Anhängern koppelbar zu sein, die jeweils den zweiten Schnittstellenabschnitt umfassen.

Diese Ausgestaltung dient insbesondere zur näheren Ausführung, dass die Schnittstelle nicht lediglich an der Zugmaschine oder dem mindestens einen Anhänger vorgesehen ist, sondern anteilig an beiden vorgesehen ist. Durch diese Schnittstelle ist es nämlich auch möglich, eine ganze Flotte von Anhängern zu betreiben, die allesamt den gleichen zweiten Schnittstellenabschnitt umfassen, der mit dem ersten Schnittstellenabschnitt der Zugmaschine kompatibel ist. Somit ist es möglich, die Zugmaschine in einem großen Einsatzspektrum einzusetzen, da die Anhänger bis auf den Schnittstellenabschnitt und die zweite Energiespeichereinheit nicht identisch ausgeführt sein müssen. Die Anhänger können sich vielmehr strukturell in ihrem Aufbau und ihrer Ausgestaltung unterscheiden.

In einer bevorzugten Ausführungsform umfasst der Anhänger eine, insbesondere homologationsrelevante Beleuchtung, vorzugsweise mit einem Spannungsniveau von 12 Volt. Die Beleuchtung kann vorzugsweise Richtungswechselanzeiger bzw. Blinker und/oder zumindest ein Bremslicht und/oder eine Nebelschlussleuchte und/oder eine Kennzeichenbeleuchtung umfassen. Die Beleuchtung kann vorzugsweise über eine Bluetooth-Schnittstelle zwischen der Zugmaschine und dem zumindest einen Anhänger, passend zu einer jeweiligen Fahrsituation über Bluetooth aktiviert und/oder angesteuert und/oder geregelt werden. Eine Energieversorgung der Beleuchtung und/oder der Bluetooth-Schnittstelle wird und/oder werden vorzugsweise aus der zweiten Energiespeichereinheit, insbesondere der Niedervoltbatterie, des Anhängers bereitgestellt. Die zweite Energiespeichereinheit kann auch dazu ausgebildet sein, weitere Aktuatoren, wie zum Beispiel eine elektronische Bremsanlage des Anhängers mit elektrischer Energie zu versorgen, so dass diese aktiviert und/oder angesteuert und/oder geregelt werden können.

Dies gilt auch für den Aktuator einer aktiven/elektronischen Bremsanlage im Anhänger.

In einer bevorzugten Ausführungsform umfasst der Anhänger eine Ladeschnittstelle, die dazu ausgebildet ist, die zweite Energiespeichereinheit mit externer elektrischer Energie zu laden. Die Ladeschnittstelle ist also dazu ausgelegt, zumindest die zweite Energiespeichereinheit mit externer elektrischer Energie, wie beispielsweise Photovoltaikenergie, zu laden. Hierzu kann die Ladeschnittstelle vorzugsweise einen DC/DC-Wandler und/oder einen Wechselrichter und/oder eine sonstige Ladeelektronik umfassen. Es kann jedoch auch bevorzugt sein, wenn ein DC/DC-Wandler und/oder sonstiges Ladeequipment in einer externen Ladesäule bzw. Ladestation vorgesehen ist, um somit keinen Bauraum im Anhänger zu beanspruchen.

Beispielhaft kann eine Hochvoltseite einer Photovoltaikanlage über einen DC/DC-Wandler mit der Ladeschnittstelle vorzugsweise über ein Ladekabel verbindbar sein. In diesem Fall kann die Ladeschnittstelle beispielsweise einen Stecker zur Herstellung einer Steckverbindung zum Laden umfassen. Dabei ist der DC/DC-Wandler bevorzugt nicht in dem Anhänger umfasst, sondern beispielsweise in einer Ladesäule vorgesehen. Die Niedervoltseite des DC/DC-Wandlers ist vorzugsweise über ein oder mehrere Kabel an der Ladeschnittstelle des Anhängers anschließbar, so dass die zweite Energiespeichereinheit geladen werden kann. Vorzugsweise umfasst der mindestens eine Anhänger ein Batteriemanagementsystem (BMS) mit einer integrierten Ladezustandsüberwachung und Laderegelung, um derart eine möglichst optimale Aufladung des zweiten Energiespeichers zu gewährleisten.

Besonders bevorzugt ist erfindungsgemäß ein Mobilitätssystem, insbesondere ein dezentrales Energiespeicher- und Verteilsystem bereitgestellt. Das Mobilitätssystem umfasst mindestens eine erfindungsgemäße Fahrzeugspanneinheit, eine Photovoltaikanlage und eine Ladeelektronik, die zumindest mit der Ladeschnittstelle des Anhängers koppelbar ist und derart dazu eingerichtet ist, über die Ladeschnittstelle des Anhängers die zweite Energiespeichereinheit mit elektrischer Energie zu laden, die durch die Photovoltaikanlage bereitgestellt ist. Ergänzend kann die Ladeelektronik dazu ausgebildet sein, mit der Ladeschnittstelle der Zugmaschine koppelbar zu sein, und dazu ausgebildet sein, über die Ladeschnittstelle der Zugmaschine die erste Energiespeichereinheit mit elektrischer Energie zu laden, die durch die Photovoltaikanlage bereitgestellt ist.

Das erfindungsgemäße Mobilitätssystem ist hinsichtlich der eingangs genannten Problematik, nämlich der Bereitstellung von Zwischen- bzw. Pufferspeichern zur Abfangung von Energieerzeugungsspitzen beim Einsatz von erneuerbaren Energien vorteilhaft. Es ist nämlich möglich, den mindestens einen Anhänger, realistischerweise eine Vielzahl von Anhängern, als Zwischenspeicher zu verwenden. Bei einem flächenmäßigen Einsatz des Mobilitätssystems, beispielsweise innerhalb Deutschlands, ist es somit möglich, das elektrische Netz nachhaltig zu stabilisieren, da im Falle von Erzeugungsspitzen Energie in den Anhängern zwischengespeichert und bei einem Auftreten von Lastspitzen wieder im Netz zur Verfügung gestellt werden kann.

Mit anderen Worten kann das erfindungsgemäße Mobilitätssystem bzw. die zweite Energiespeichereinheit des mindestens einen Anhängers, bevorzugt einer Anhängerflotte unabhängig von der ersten Energiespeichereinheit der Zugmaschine geladen werden. Hierdurch ist die Nutzung als Pufferspeicher zu Zeiten einer Spitzenstromproduktion aus erneuerbaren Energiequellen, z. B. Photovoltaik ermöglicht. Die erfindungsgemäße Fahrzeugspanneinheit kann vorzugsweise Leistungsspitzen einer dezentralen Energieproduktion, welche das Versorgungsnetz überlasten könnten, puffern und zeitsowie ortsunabhängig wieder bereitstellen. Hierdurch wird die Netzinfrastruktur entlastet und das angesichts der dynamischen Entwicklung der dezentralen Energieproduktion gefürchtete Blackout-Risiko reduziert. Die bevorzugte Vielzahl von Anhängern einer ganzen Anhängerflotte kann vorzugsweise auf bestehenden Industrieflächen, beispielsweise von Logistikverteilzentren, und/oder lokalen Gewerbeflächen, zum Beispiel von E-Commerce und/oder dem Großhandel zwischengeparkt und dort als Pufferspeicher eingesetzt werden.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen.

Ausführungsformen der Erfindung sind in den Zeichnungen schematisiert dargestellt und werden nachfolgend beispielhaft erläutert. Es zeigt:
- Figur 1: eine schematische Ansicht einer Fahrzeuggespanneinheit nach einem ersten Ausführungsbeispiel der Erfindung;
- Figur 2: eine schematische Ansicht einer Fahrzeuggespanneinheit nach einem zweiten Ausführungsbeispiel der Erfindung;
- Figur 3: eine schematische Ansicht einer Fahrzeuggespanneinheit nach einem dritten Ausführungsbeispiel der Erfindung; und
- Figur 4: eine schematische Ansicht eines Mobilitätssystems nach einem Ausführungsbeispiel der Erfindung.

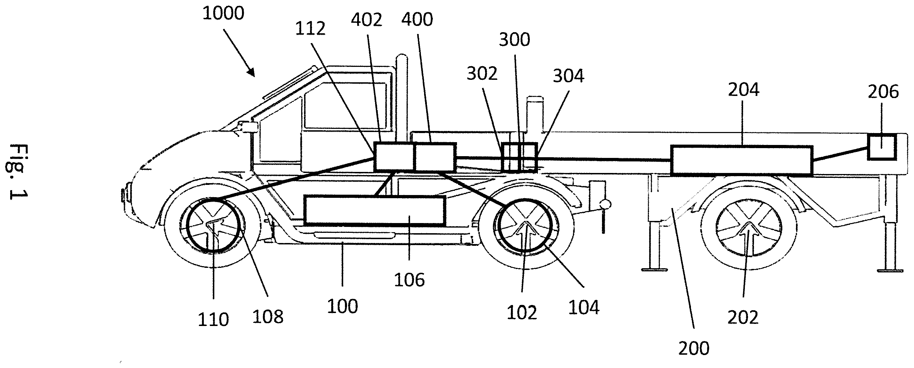

In den Figuren 1 bis 3 sind Ausführungsbeispiele der erfindungsgemäßen Fahrzeuggespanneinheit gezeigt, die in ihrer Gesamtheit mit der Bezugsziffer 1000 gekennzeichnet ist. Die Figuren zeigen verschiedene Konfigurationen, welche sich hinsichtlich einer elektrotechnischen Architektur bzw. eines elektrotechnischen Aufbaus des Antriebes unterscheiden. Gleiche Merkmale sind mit gleichen Bezugszeichen versehen.

Figur 1 zeigt die Fahrzeuggespanneinheit 1000 nach einem ersten Ausführungsbeispiel. Die Fahrzeuggespanneinheit 1000 umfasst eine Zugmaschine 100 bzw. ein Kraftfahrzeug und mindestens einen Anhänger 200. Ferner umfasst die Fahrzeuggespanneinheit 1000 eine Schnittstelle 300 und eine erste Leistungselektronik 400. Die Schnittstelle 300 ist dazu eingerichtet, die Zugmaschine 100 mit dem mindestens einen Anhänger 200 elektrisch und/oder mechanisch zu koppeln. Die Schnittstelle 300 kann beispielsweise eine Sattelkupplung aufweisen.

Die Zugmaschine 100 umfasst zumindest eine erste Antriebsachse 102, einen Elektromotor 104, der dazu ausgebildet ist, die erste Antriebsachse 102 anzutreiben, und eine erste Energiespeichereinheit 106. Der mindestens eine Anhänger 200 umfasst mindestens eine Radachse 202 und eine zweite Energiespeichereinheit 204. Die erste Leistungselektronik 400 ist dazu eingerichtet, zumindest den Elektromotor 104 der ersten Antriebsachse 102 in Abhängigkeit von einer jeweiligen Betriebssituation der Fahrzeuggespanneinheit 1000 über die Schnittstelle 300 mit aus der zweiten Energiespeichereinheit 204 entnommener, elektrischer Energie zu speisen.

Die Zugmaschine 100 umfasst ferner eine zweite Leistungselektronik 402, die dazu eingerichtet ist, zumindest einen Elektromotor 108 einer zweiten Antriebsachse 110 der Zugmaschine 100 in Abhängigkeit von einer jeweiligen Betriebssituation der Fahrzeuggespanneinheit 1000 mit elektrischer Energie aus der ersten Energiespeichereinheit 106 zu speisen. Gemäß Figur 1 sind die erste und die zweite Leistungselektronik 400, 402 als zwei getrennte Leistungselektroniken in einem gemeinsamen Gehäuse ausgebildet.

Gemäß Figur 1 ist die Zugmaschine 100 als konventionelles Elektrofahrzeug ausgebildet, das erfindungsgemäß zumindest um die erste Antriebsachse 102 sowie die erste Leistungselektronik 400 ergänzt ist. Die zweite Antriebsachse 110 bildet bevorzugt die Hauptantriebsachse des Elektrofahrzeuges 100, das vorliegend als ein Frontantriebler ausgebildet ist. Der Elektromotor 108 der zweiten Antriebsachse 110 wird vorliegend über die zweite Leistungselektronik 402 durch Energie der ersten Energiespeichereinheit 106 gespeist, durch die der Elektromotor 108 angetrieben wird. Der Elektromotor 108 ist vorliegend ein Asynchronmotor. Die erste Energiespeichereinheit 106 ist eine Hochvolt-Lithium-Ionen-Batterie, die ein Gleichspannungslevel von 400 Volt aufweist. Grundsätzlich kann es auch vorteilhaft sein, wenn die erste Energiespeichereinheit 106 ein Energielevel zwischen 100 Volt und 1000 Volt aufweist. Die Gleichspannung der ersten Energiespeichereinheit 106 wird bevorzugt durch die zweite Leistungselektronik 402 mittels eines Wechselrichters (nicht gezeigt) in eine Wechselspannung umgewandelt, die dem Asynchronmotor zugeführt wird. Die Zugmaschine 100 kann eine Batteriemanagementeinheit (nicht gezeigt) umfassen, die dazu ausgebildet ist, einen Ladevorgang und/oder einen Entladevorgang der ersten Energiespeichereinheit 106 zu überwachen und/oder zu regeln.

Ferner umfasst die als Elektrofahrzeug ausgebildete Zugmaschine 100 eine Energierückgewinnungseinheit 112 (Rekuperationseinheit), die dazu ausgebildet ist, bei einem mechanischen Abbremsen der Fahrzeuggespanneinheit 1000 freiwerdende Bremsenergie generatorisch als elektrische Energie zurückzugewinnen, um diese zurückgewonnene Energie vorzugsweise in der ersten Energiespeichereinheit 106 zu speichern bzw. diese wieder aufzuladen. Es ist alternativ oder ergänzend möglich, dass die Energierückgewinnungseinheit 112 dazu ausgebildet ist, die zurückgewonnene Bremsenergie während einer Fahrt mit der Fahrzeuggespanneinheit 1000 im gekoppelten Zustand des mindestens einen Anhängers 200 in die zweite Energiespeichereinheit 204 generatorisch zurückzuspeisen. Beispielhaft kann die Energierückgewinnungseinheit 112 für die Speicherung der zurückgewonnenen Bremsenergie in der ersten und/oder der zweiten Energiespeichereinheit 106, 204 mit der ersten und/oder der zweiten Leistungselektronik 400, 402 zusammenwirken (d. h., die erste und/oder die zweite Leistungselektronik 400, 402 kann ausgebildet sein, die Rekuparation zu steuern und/oder zu regeln.

Die zweite Energiespeichereinheit 204 ist vorliegend als Niedervoltenergiespeicher bzw. als Niedervoltbatterie ausgebildet. Vorzugsweise weise die zweite Energiespeichereinheit 204 ein Gleichspannungsniveau von 50 Volt auf. Die Gleichspannung der zweiten Energiespeichereinheit 204 wird bevorzugt durch die erste Leistungselektronik 400 mittels eines Wechselrichters (nicht gezeigt) in eine Wechselspannung umgewandelt, die dem vorzugsweise als Asynchronmotor ausgeführten Elektromotor 104 zugeführt wird.

Die Schnittstelle 300 ist durch eine mechanische Kopplung, insbesondere eine Anhängerkupplung, beispielsweise eine Sattelkupplung, und/oder eine elektrische Kopplung, die insbesondere einen Schaltschütz umfasst, zwischen der Zugmaschine 100 und dem Anhänger 200 ausgebildet. Besonders bevorzugt vereint die Schnittstelle 300 die mechanische und elektrische Kopplung, derart, dass kein Kabelanschluss notwendig ist, um den mindestens einen Anhänger 200 mit der Zugmaschine 100 zu koppeln. Die Schnittstelle 300 ist vorzugsweise derart ausgebildet, dass an der Zugmaschine 100 ein erster Schnittstellenabschnitt 302 ausgebildet ist und an dem mindestens einen Anhänger 200 ein zweiter Schnittstellenabschnitt 304 ausgebildet ist, der mit dem ersten Schnittstellenabschnitt 302 mechanisch und/oder elektrisch kompatibel ist. Der erste Schnittstellenabschnitt 302 kann beispielsweise als ein Knauf bzw. Sattel einer Sattelkupplung ausgebildet sein. Der zweite Schnittstellenabschnitt 304 kann beispielsweise als eine Pfanne der Sattelkupplung ausgebildet sein. Die Schnittstelle 300 umfasst vorzugsweise einen oder mehrere Schaltschütze und/oder weitere elektrische und mechanische Bauteile, die eine mechanisch und elektrisch sichere Kupplung zwischen dem mindestens einen Anhänger 200 und der Zugmaschine 100 ermöglichen. Besonders bevorzugt ist die Schnittstelle 300 derart ausgebildet, dass der erste und der zweite Schnittstellenabschnitt 304 im entkoppelten Zustand des Anhängers 200 von der Zugmaschine 100 elektrisch spannungsfrei bzw. isoliert sind, so dass keine Gefahr eines Stromübergangs nach außen besteht.

Der mindestens eine Anhänger 200 kann vorzugsweise eine Ladeschnittstelle 206 umfassen, die dazu ausgebildet ist, die zweite Energiespeichereinheit 204 mit externer elektrischer Energie zu laden. Der Anhänger 200 kann eine Batteriemanagementeinheit (nicht gezeigt) umfassen, die dazu ausgebildet ist, einen Ladevorgang und/oder einen Entladevorgang der zweiten Energiespeichereinheit 204 zu überwachen und/oder zu regeln.

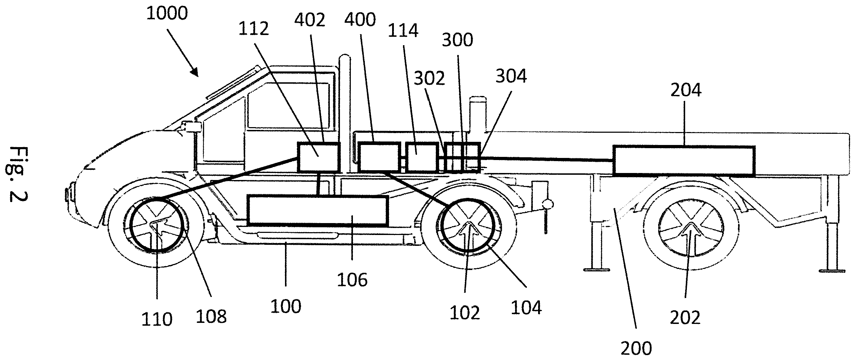

Die elektrische Architektur der Fahrzeuggespanneinheit 1000 unterscheidet sich gemäß Figur 2 von der in Figur 1 dargestellten Architektur dadurch, dass die erste und die zweite Leistungselektronik 400, 402 als zwei voneinander separate Systeme ausgebildet sind. Dies hat insbesondere Vorteile bei der Nachrüstung bzw. Aufrüstung einer konventionellen Zugmaschine.

Ferner unterscheidet sich die Fahrzeuggespanneinheit 1000 gemäß Figur 2 dadurch, dass die Zugmaschine 100 eine dritte Energiespeichereinheit 114 umfasst. Die dritte Energiespeichereinheit 114 kann beispielsweise als Pufferbatterie und/oder als Super-Kondensator ausgebildet sein. Die dritte Energiespeichereinheit 114 kann vorzugsweise als abgetrennte Partition der ersten Energiespeichereinheit 106 ausgebildet sein oder von dieser unabhängig angeordnet sein. Die zweite Energiespeichereinheit 204 ist mit der dritten Energiespeichereinheit 114 über die Schnittstelle 300 elektrisch leitend verbunden. Die dritte Energiespeichereinheit 114 ist ferner mit der ersten Leistungselektronik 400 elektrisch leitend verbunden. Diese Ausgestaltung hat den Vorteil, dass Energie von der zweiten Energiespeichereinheit 204 in der dritten Energiespeichereinheit 114 (zwischen-)gespeichert bzw. in diese übertragen werden kann und der Elektromotor 104 der ersten Antriebsachse 102 über die erste Leistungselektronik 400 unmittelbar mit der Energie aus der dritten Energiespeichereinheit 114 gespeist werden kann. Dadurch kann die erste Leistungselektronik 400 unabhängig von der Schnittstelle 300 ausgebildet sein und muss etwaige Schwankungen der Schnittstelle 300 nicht abpuffern, da dieses Abpuffern bevorzugt durch die dritte Energiespeichereinheit 114 erfolgen kann. Hierdurch ist es auch möglich, die Schnittstelle 300 elektrotechnisch zu vereinfachen. Vorzugsweise weist die dritte Energiespeichereinheit 114 zumindest dasselbe oder ein ähnliches (± 10 %) Spannungsniveau wie die zweite Energiespeichereinheit 204 auf.

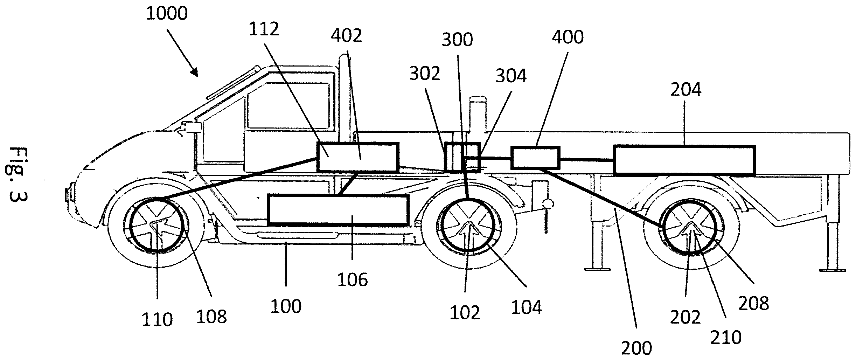

In Figur 3 ist eine Ausführungsform der Fahrzeuggespanneinheit 1000 dargestellt, die sich von den zuvor gezeigten Ausführungsformen dadurch unterscheidet, dass die erste Leistungselektronik 400 in dem mindestens einen Anhänger 200 und nicht in der Zugmaschine 100 (wie im Falle der Figuren 1 und 2) umfasst ist. Der Energiefluss zu der ersten Antriebsachse 102 geht also ausgehend von der zweiten Energiespeichereinheit 204 zuerst über die erste Leistungselekronik 400 und nachfolgend über die Schnittstelle 300 in den Elektromotor 104 der ersten Antriebsachse 102. Ferner umfasst der Anhänger 200 gemäß Figur 3 zumindest eine mit einem Elektromotor 208 angetriebene dritte Antriebsachse 210. Die dritte Antriebsachse 210 kann zwei voneinander unabhängig ansteuerbare Radnabenmotorantriebe umfassen, so dass jedes Rad der Radachse 202 selbstständig beweglich und durch die erste Leistungselektronik 400 ansteuerbar ist. Es versteht sich, dass der Anhänger 200 für die dritte Antriebsachse 210 auch noch eine dritte Leistungselekronik (nicht gezeigt) umfassen kann oder dass der Antrieb der dritten Antriebsachse 210 über die erste Leistungselektronik 400 durchgeführt wird.

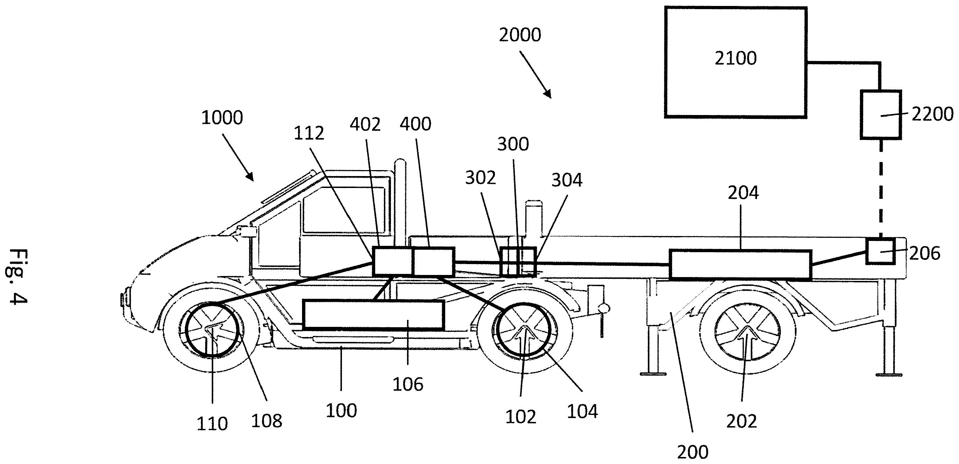

Figur 4 zeigt ein Ausführungsbeispiel eines erfindungsgemäßen Mobilitätssystems 2000 mit einer Fahrzeuggespanneinheit 1000 gemäß dem ersten Ausführungsbeispiel gemäß Figur 1. Das Mobilitätssystem 2000 umfasst eine Photovoltaikanlage 2100 und eine Ladeelektronik 2200. Die Ladeelektronik 2200 ist mit der Ladeschnittstelle 206 des Anhängers 200 koppelbar und dazu eingerichtet, über die Ladeschnittstelle 206 die zweite Energiespeichereinheit 204 mit elektrischer Energie zu laden, die durch die Photovoltaikanlage 2100 bereitgestellt ist. Das Mobilitätssystem 2000 umfasst vorzugsweise eine Vielzahl von Fahrzeuggespanneinheiten 1000 gemäß ihren beliebigen Ausführungsbeispielen und/oder eine Vielzahl von Anhängern 200. Die Photovoltaikanlage 2100 umfasst vorzugsweise mindestens eine Photovoltaikzelle. Vorzugsweise ist die Photovoltaikanlage 2100 auf einem Dach eines Gebäudes und/oder auf einer Freifläche angeordnet. Die Ladeelektronik 2200 umfasst vorzugsweise eine Lademanagementeinheit und/oder zumindest einen DC/DC-Wandler. Grundsätzlich kann alternativ oder ergänzend ein Laden der zweiten Energiespeichereinheit 204 mit externer Windenergie aus einer Windkraftanlage und/oder aus einer anderen erneuerbaren Energiequelle erfolgen.

### Bezugszeichenliste

- 100: Zugmaschine, Kraftfahrzeug
- 102: erste Antriebsachse
- 104: Elektromotor der ersten Antriebsachse
- 106: erste Energiespeichereinheit
- 108: Elektromotor der zweiten Antriebsachse
- 110: zweite Antriebsachse
- 112: Energierückgewinnungseinheit
- 114: dritte Energiespeichereinheit
- 200: Anhänger
- 202: Radachse
- 204: zweite Energiespeichereinheit
- 206: Ladeschnittstelle
- 208: Elektromotor der dritten Antriebsachse
- 210: dritte Antriebsachse
- 300: Schnittstelle
- 302: erster Schnittstellenabschnitt
- 304: zweiter Schnittstellenabschnitt
- 400: erste Leistungselektronik
- 402: zweite Leistungselektronik
- 1000: Fahrzeuggespanneinheit
- 2000: Mobilitätssystem
- 2100: Photovoltaikanlage
- 2200: Ladeelektronik

## Patentansprüche

1. Fahrzeuggespanneinheit, umfassend eine Zugmaschine (100) mit zumindest einer ersten Antriebsachse (102), einem Elektromotor (104), der dazu ausgebildet ist, die erste Antriebsachse (102) anzutreiben, und einer ersten Energiespeichereinheit (106), eine Schnittstelle (300), eine erste Leistungselektronik (400) und mindestens einen Anhänger (200) mit mindestens einer Radachse (202), der über die Schnittstelle (300) mit der Zugmaschine (100) koppelbar ist, wobei der Anhänger (200) eine zweite Energiespeichereinheit (204) umfasst und die erste Leistungselektronik (400) dazu eingerichtet ist, zumindest den Elektromotor (104) der ersten Antriebsachse (102) in Abhängigkeit von einer jeweiligen Betriebssituation der Fahrzeuggespanneinheit über die Schnittstelle (300) mit aus der zweiten Energiespeichereinheit (204) entnommener, elektrischer Energie zu speisen, **dadurch gekennzeichnet, dass** die Zugmaschine (100) eine zweite Leistungselektronik (402) umfasst, die dazu eingerichtet ist, zumindest einen Elektromotor (108) einer zweiten Antriebsachse (110) der Zugmaschine (100) in Abhängigkeit von einer jeweiligen Betriebssituation der Fahrzeuggespanneinheit mit elektrischer Energie aus der ersten Energiespeichereinheit (106) zu speisen, dass die erste Energiespeichereinheit (106) eine Hochvoltbatterie und die zweite Energiespeichereinheit (204) eine Niedervoltbatterie umfasst, dass der Elektromotor (104) der ersten Antriebsachse (106) als ein Niedervoltantrieb ausgebildet ist, und dass der Elektromotor (108) der zweiten Antriebsachse (110) als ein Hochvoltantrieb ausgebildet ist.

2. Fahrzeuggespanneinheit nach einem der vorstehenden Ansprüche, **dadurch gekennzeichnet, dass** die zweite Energiespeichereinheit (204) über die Schnittstelle (300) mit der ersten Leistungselektronik (400) verbunden ist.

3. Fahrzeuggespanneinheit nach Anspruch 1 oder 2, **dadurch gekennzeichnet, dass** die Zugmaschine (100) eine dritte Energiespeichereinheit (114), insbesondere eine Pufferbatterie und/oder einen Super-Kondensator, umfasst, die zweite Energiespeichereinheit (204) mit der dritten Energiespeichereinheit (114) über die Schnittstelle (300) elektrisch leitend verbindbar ist und die dritte Energiespeichereinheit (114) mit der ersten Leistungselektronik (400) elektrisch leitend verbunden ist.

4. Fahrzeuggespanneinheit nach einem der vorstehenden Ansprüche, **dadurch gekennzeichnet, dass** die Schnittstelle (300) durch eine mechanische Kopplung, insbesondere eine Anhängerkupplung, und/oder eine elektrische Kopplung, die insbesondere einen Schaltschütz umfasst, zwischen der Zugmaschine (100) und dem Anhänger (200) ausgebildet ist.

5. Fahrzeuggespanneinheit nach einem der vorstehenden Ansprüche, **dadurch gekennzeichnet, dass** der Anhänger (200) zumindest eine mit einem Elektromotor (208) angetriebene dritte Antriebsachse (210) umfasst.

6. Fahrzeuggespanneinheit nach einem der vorstehenden Ansprüche, **dadurch gekennzeichnet, dass** an der Zugmaschine (100) ein erster Schnittstellenabschnitt (302) ausgebildet ist und an dem mindestens einen Anhänger (200) ein zweiter Schnittstellenabschnitt (304) ausgebildet ist, der mit dem ersten Schnittstellenabschnitt (302) mechanisch und/oder elektrisch kompatibel ist.

7. Fahrzeuggespanneinheit nach einem der vorstehenden Ansprüche, **dadurch gekennzeichnet, dass** der Anhänger (200) eine Ladeschnittstelle (206) umfasst, die dazu ausgebildet ist, die zweite Energiespeichereinheit (204) mit externer elektrischer Energie zu laden.

8. Mobilitätssystem mit mindestens einer Fahrzeugspanneinheit nach Anspruch 7, einer Photovoltaikanlage (2100) und einer Ladelektronik (2200), die mit der Ladeschnittstelle (206) des Anhängers (200) koppelbar ist und dazu eingerichtet ist, über die Ladeschnittstelle (206) die zweite Energiespeichereinheit (204) mit elektrischer Energie zu laden, die durch die Photovoltaikanlage (2100) bereitgestellt ist.

## Claims

1. A vehicle combination unit comprising: a tractor (100) having at least a first driving axle (102), an electric motor (104) configured to drive the first driving axle (102), and a first energy storage unit (106); an interface (300); first power electronics (400); and at least one trailer (200) having at least one wheel axle (202) and being configured to be coupled to the tractor (100) via the interface (300), the trailer (200) comprising a second energy storage unit (204), and the first power electronics (400) being configured to supply at least the electric motor (104) of the first driving axle (102) with electrical energy from the second energy storage unit (204) via the interface (300) as a function of a given operating situation of the vehicle combination unit, **characterized in that** the tractor (100) comprises second power electronics (402) configured to supply at least an electric motor (108) of a second driving axle (110) of the tractor (100) with electrical energy from the first energy storage unit (106) as a function of a given operating situation of the vehicle combination unit, the first energy storage unit (106) comprises a high-voltage battery and the second energy storage unit (204) comprises a low-voltage battery, the electric motor (104) of the first driving axle (106) is a low-voltage drive, and the electric motor (108) of the second driving axle (110) is a high-voltage drive.

2. The vehicle combination unit according to any one of the preceding claims, **characterized in that** the second energy storage unit (204) is connected to the first power electronics (400) via the interface (300).

3. The vehicle combination unit according to claim 1 or 2, **characterized in that** the tractor (100) comprises a third energy storage unit (114), in particular a buffer battery and/or a super capacitor, the second energy storage unit (204) is configured to be connected to the third energy storage unit (114) in an electrically conductive manner via the interface (300), and the third energy storage unit (114) is connected to the first power electronics (400) in an electrically conductive manner.

4. The vehicle combination unit according to any one of the preceding claims, **characterized in that** the interface (300) is formed by a mechanical coupling, in particular a trailer coupling, and/or an electrical coupling, which comprises in particular a contactor, between the tractor (100) and the trailer (200).

5. The vehicle combination unit according to any one of the preceding claims, **characterized in that** the trailer (200) comprises at least a third driving axle (210), which is driven by an electric motor (208).

6. The vehicle combination unit according to any one of the preceding claims, **characterized in that** a first interface portion (302) is formed on the tractor (100), and a second interface portion (304) is formed on the at least one trailer (200), the second interface portion (304) being mechanically and/or electrically compatible with the first interface portion (302).

7. The vehicle combination unit according to any one of the preceding claims, **characterized in that** the trailer (200) comprises a charging interface (206) configured to charge the second energy storage unit (204) with external electrical energy.

8. A mobility system comprising least one vehicle combination unit according to claim 7, a photovoltaic system (2100) and charging electronics (2200) configured to be coupled to the charging interface (206) of the trailer (200) and charge the second energy storage unit (204) with electrical energy provided by the photovoltaic system (2100) via the charging interface (206).

## Revendications

1. Unité d'attelage de véhicule comprenant : un véhicule tracteur (100) ayant au moins un premier essieu d'entraînement (102), un moteur électrique (104) configuré pour entraîner le premier essieu d'entraînement (102), et une première unité de stockage d'énergie (106) ; une interface (300) ; une première électronique de puissance (400) ; et au moins une remorque (200) ayant au moins un essieu de roue (202) et étant configurée pour être accouplée au véhicule tracteur (100) par l'interface (300), la remorque (200) comprenant une deuxième unité de stockage d'énergie (204) et la première électronique de puissance (400) étant configurée pour alimenter au moins le moteur électrique (104) du premier essieu d'entraînement (102) en énergie électrique de la deuxième unité de stockage d'énergie (204) par l'interface (300) en fonction d'une situation de fonctionnement respective de l'unité d'attelage de véhicule, **caractérisée en ce que** le véhicule tracteur (100) comprend une deuxième électronique de puissance (402) configurée pour alimenter au moins un moteur électrique (108) du deuxième essieu d'entraînement (110) du véhicule tracteur (100) en énergie électrique de la première unité de stockage d'énergie (106) en fonction d'une situation de fonctionnement respective de l'unité d'attelage de véhicule, la première unité de stockage d'énergie (106) comprend une batterie haute tension et la deuxième unité de stockage d'énergie (204) comprend une batterie basse tension, le moteur électrique (104) du premier essieu d'entraînement (106) est un moteur basse tension et le moteur électrique (108) du deuxième essieu d'entraînement (110) est un moteur haute tension.

2. Unité d'attelage de véhicule selon l'une quelconque des revendications précédentes, **caractérisée en ce que** la deuxième unité de stockage d'énergie (204) est connectée à la première électronique de puissance (400) par l'interface (300).

3. Unité d'attelage de véhicule selon la revendication 1 ou 2, **caractérisée en ce que** le véhicule tracteur (100) comprend une troisième unité de stockage d'énergie (114), notamment une batterie tampon et/ou un supercondensateur, la deuxième unité de stockage d'énergie (204) est configurée pour être connectée à la troisième unité de stockage d'énergie (114) de manière électriquement conductrice par l'interface (300) et la troisième unité de stockage d'énergie (114) est connectée à la première électronique de puissance (400) de manière électriquement conductrice.

4. Unité d'attelage de véhicule selon l'une quelconque des revendications précédentes, **caractérisée en ce que** l'interface (300) est formée par un attelage mécanique, notamment un attelage de remorque, et/ou par un attelage électrique, qui comprend notamment un contacteur, entre le véhicule tracteur (100) et la remorque (200).

5. Unité d'attelage de véhicule selon l'une quelconque des revendications précédentes, **caractérisée en ce que** la remorque (200) comprend au moins un troisième essieu d'entraînement (210), qui est entraîné par un moteur électrique (208).

6. Unité d'attelage de véhicule selon l'une quelconque des revendications précédentes, **caractérisée en ce qu'**une première partie d'interface (302) est formée sur le véhicule tracteur (100) et une deuxième partie d'interface (304) est formée sur l'au moins une remorque (200), la deuxième partie d'interface (304) étant compatible mécaniquement et/ou électriquement avec la première partie d'interface (302).

7. Unité d'attelage de véhicule selon l'une quelconque des revendications précédentes, **caractérisée en ce que** la remorque (200) comprend une interface de charge (206) configurée pour charger la deuxième unité de stockage d'énergie (204) d'énergie électrique externe.

8. Système de mobilité comprenant au moins une unité d'attelage de véhicule selon la revendication 7, une installation photovoltaïque (2100) et une électronique de charge (2200) configurée pour être accouplée à l'interface de charge (206) de la remorque (200) et charger la deuxième unité de stockage d'énergie (204) d'énergie électrique fournie par l'installation photovoltaïque (2100) par l'interface de charge (206).
